# EUROPÄISCHE PATENTANMELDUNG

(11) **EP 2 690 151 A1**
(43) Veröffentlichungstag der Anmeldung: **29.01.2014**
(21) Anmeldenummer: 13176606.5
(22) Anmeldetag: 16.07.2013
(51) Int. Cl.: C09J 153/02, C09J 7/02, C08L 53/02, B32B 7/12, C08L 71/02

(54) **Haftklebemasse für ein Klebeband und Verwendung derselben in einem Klebeband**

(30) Priorität: 23.07.2012 DE 102012212879
(71) Anmelder: tesa SE, 20253 Hamburg (DE)
(72) Erfinder: Krawinkel, Thorsten, 22457 Hamburg (DE); de Roton, Gaelle, 22527 Hamburg (DE)

(57) **Zusammenfassung**

Die Erfindung betrifft eine Haftklebemasse mindestens zu 70 Gew.-%, vorzugsweise zu 80 Gew.-% enthaltend ein Gemisch aus (i) Blockcopolymeren aus einer Mischung aus Blockcopolymeren mit der Struktur I und II A'-B'A-B-A, (A-B)ₙ, (A-B)ₙX und/oder (A-B-A)ₙX, wobei
• X der Rest eines Kopplungsreagenzes ist,
• n eine ganze Zahl zwischen 2 und 10 ist,
• A und A' ein Polymerblock aus einem Vinylaromaten ist,
• B und B' ein Polymerblock ist, gebildet aus Butadien, einem Gemisch aus Butadien und Isopren und/oder einem Gemisch aus Butadien und Styrol und
• A und A' beziehungsweise B und B' gleich oder unterschiedlich sein können,

(ii) mindestens ein Klebharz, wobei der Anteil der Blockcopolymere I) zwischen 30 und 70 Gew.-% bezogen auf die Gesamtmenge an Blockcopolymeren ist,wobei der Anteil A bei den Blockcopolymeren II) zwischen 25 und 40 Gew.-% liegt, und wobei die A-B-Einheit innerhalb von zumindest einem der Vinylaromatenblockcopolymere der Struktur II ein Molekulargewicht M_{w} von größer 65.000 g/mol aufweist und das Molekulargewicht M_{w} des gesamten Blockcopolymeren II größer als 130.000 g/mol ist.

## Beschreibung

Die Erfindung betrifft eine Haftklebemasse auf der Basis von Styrolblockcopolymeren, die sich durch besonders hohe und ausgewogene Klebkräfte auf polaren und unpolaren Untergründen auszeichnet, sowie deren Verwendung.

Als Haftklebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen und die Wiederablösbarkeit beruht auf ihren adhäsiven Eigenschaften und auf ihren kohäsiven Eigenschaften. Als Basis für Haftklebemassen kommen verschiedene Verbindungen in Frage.

Klebebänder, die mit Haftklebemassen ausgerüstet sind, so genannte Haftklebebänder, werden heute im industriellen und privaten Bereich in vielfältiger Weise verwendet. Üblicherweise bestehen Haftklebeänder aus einer Trägerfolie, die ein- oder beidseitig mit einer Haftklebmasse ausgerüstet ist. Es gibt auch Haftklebebänder, die ausschließlich aus einer Haftklebmasseschicht und keiner Trägerfolie bestehen, die so genannten Transfer-Tapes. Die Zusammensetzung der Haftklebebänder kann sehr unterschiedlich sein und richtet sich nach den jeweiligen Anforderungen der unterschiedlichen Anwendungen. Die Träger bestehen üblicherweise aus Kunststofffolien wie zum Beispiel Polypropylen, Polyethylen, Polyester (zum Beispiel Polyethylenterephthalat) oder auch aus Papier, Gewebe oder Vliesstoff.

Die Selbst- beziehungsweise Haftklebemassen basieren zumeist auf Acrylat-Copolymeren, Silikonen, Naturkautschuk, Synthesekautschuk, Styrolblockcopolymeren oder Polyurethanen.

Es besteht ein Bedarf an Klebebändern, die eine sehr hohe Verklebungsfestigkeit auf polaren und unpolaren Untergründen aufweisen, aber auch bei erhöhten Temperaturen ihre Kohäsion nicht verlieren. Insbesondere bei Verklebungen im Außenbereich oder in Automobilen können Temperaturen von über 60 °C bis 70 °C auftreten. Für Klebebänder mit besonders hohen Halteleistungen insbesondere im Consumerbereich werden häufig Klebmassen auf Basis von Styrolblockcopolymeren eingesetzt. Diese haben den Vorteil, dass sie eine sehr hohe Verklebungsfestigkeit aufweisen können bei gleichzeitig sehr hoher Kohäsion. Durch eine hohe Anfassklebrigkeit sind auch Verklebungen auf rauen Untergründen sicher möglich.
Typischerweise finden lineare oder radiale Blockcopolymere auf Basis von Polystyrolblöcken und Polybutadienblöcken und/oder Polyisoprenblöcken Verwendung, also zum Beispiel radiale Styrol-Butadien-(SB)ₙ und/oder lineare Styrol-Butadien-Styrol (SBS)- und/oder lineare Styrol-Isopren-Styrol (SIS)-Blockcopolymere.
Die im Markt befindlichen Produkte mit Haftklebemassen auf Basis von Styrolblockcopolymeren zeigen Schwächen bei der Verklebungsfestigkeit bei Temperaturen oberhalb von 50 °C. Durch ein Erweichen der vornehmlich aus Polystyrol bestehenden Hartphasen (Blockpolystyroldomänen) kommt es insbesondere bei der Verklebung von mittelschweren Gegenständen zum kohäsiven Versagen der Haftklebestreifen.

Ein Versagen der Verklebung tritt besonders bei einer Kippscherbelastung (bei der ein Drehmoment wirksam ist wie zum Beispiel bei der Verklebung eines Hakens) deutlich stärker auf als bei einer reinen Scherbelastung.

Aufgabe der Erfindung ist es daher, eine verbesserte Haftklebemasse auf der Basis von Styrolblockcopolymeren insbesondere für Klebebänder zu schaffen, die auch auf polaren und unpolaren Untergründen eine gute Verklebungsfestigkeit aufweisen.

Gelöst wird diese Aufgabe durch eine Haftklebemasse, wie sie im Hauptanspruch niedergelegt ist. Gegenstand der Unteransprüche sind vorteilhafte Fortbildungen des Erfindungsgegenstandes. Des Weiteren umfasst die Erfindung die Verwendung dieser Haftklebemasse.

Demgemäß betrifft die Erfindung eine Haftklebemasse enthaltend mindestens zu 70 Gew.-%, vorzugsweise zu 80 Gew.-% ein Gemisch aus
(i) Blockcopolymeren aus einer Mischung aus Blockcopolymeren mit der Struktur I und II
   I) A'-B'
   II) A-B-A, (A-B)ₙ, (A-B)ₙX und/oder (A-B-A)ₙX, wobei
      - X der Rest eines Kopplungsreagenzes ist,
      - n eine ganze Zahl zwischen 2 und 10 ist,
      - A und A' ein Polymerblock aus einem Vinylaromaten ist,
      - B und B' ein Polymerblock ist, gebildet aus Butadien, einem Gemisch aus Butadien und Isopren und/oder einem Gemisch aus Butadien und Styrol und
      - A und A' beziehungsweise B und B' gleich oder unterschiedlich sein können,
(ii) mindestens ein Klebharz,
wobei der Anteil der Blockcopolymere I) zwischen 30 und 70 Gew.-% bezogen auf die Gesamtmenge an Blockcopolymeren ist,
wobei der Anteil A bei den Blockcopolymeren II) zwischen 25 und 40 Gew.-% liegt,
und wobei die A-B-Einheit innerhalb von zumindest einem der Vinylaromatenblockcopolymere der Struktur II ein Molekulargewicht M_{w} von größer 65.000 g/mol aufweist und das Molekulargewicht M_{w} des gesamten Blockcopolymeren II größer als 130.000 g/mol ist.

Vorzugsweise haben alle A-B-Einheiten innerhalb von zumindest einem der Vinylaromatenblockcopolymere der Struktur II ein Molekulargewicht M_{w} von größer 65.000 g/mol.

Weiter vorzugsweise haben alle A-B-Einheiten in allen Vinylaromatenblockcopolymeren der Struktur II ein Molekulargewicht M_{w} von größer 65.000 g/mol.

Gemäß einer vorteilhaften Ausführungsform der Erfindung enthält die Haftklebemasse als Elastomere nur ein Gemisch von Vinylaromatenblockcopolymeren der Strukturen I und II.

Das Gemisch kann aus genau einem Vinylaromatenblockcopolymer der Struktur I und genau einem Vinylaromatenblockcopolymer der Struktur II bestehen.
In einer alternativen Ausführungsform der Erfindung enthält das Gemisch mehrere unterschiedliche Vinylaromatenblockcopolymeren der Struktur I und/oder der Struktur II, vorzugsweise gleichzeitig mehrere unterschiedliche Vinylaromatenblockcopolymeren der Struktur I und der Struktur II.

Gemäß einer weiteren bevorzugten Ausführungsform der Erfindung liegt der Anteil des Vinylaromatenblockcopolymers oder der Vinylaromatenblockcopolymere der Struktur I an der Summe aus den Vinylaromatenblockcopolymeren der Struktur I und II zwischen 50 und 65 Gew.-%.

Gemäß einer weiteren bevorzugten Ausführungsform der Erfindung betragen der oder die Anteil(e) des Vinylaromatenendblocks A' an dem Blockcopolymer der Struktur I zwischen 20 und 40 Gew.-%, bevorzugt zwischen 25 und 33 Gew.-%.
In einer Variante der Erfindung liegen der oder die Anteil(e) des Vinylaromatenendblocks A' an dem Blockcopolymer der Struktur I zwischen 13 und 20 Gew.-%.

Als Vinylaromaten A beziehungsweise A' innerhalb der Vinylaromatenblockcopolymere können zum Beispiel eingesetzt werden Styrol, Vinyltoluol, α-Methylstyrol, Chlorstyrol, o-, oder p-Methylstyrol 2,5-Dimethylstyrol, p-Methoxystyrol und p-tert.-Butylstyrol.

Das Polymer B beziehungsweise B' kann aus Butadien allein oder im Gemisch mit Isopren oder Styrol gebildet werden. Dabei sind sowohl Blockstrukturen als auch statisch verteilte Monomer möglich.

Übliche Kopplungsreagenzien zur Herstellung von Zwei-, Drei- sowie Multi- und Sternblockcopolymeren sind dem Fachmann bekannt. Um nur einige zu nennen, werden beispielhaft 2-Vinylpyridin, 1,4-Di(brommethyl)benzol, Dichlordimethylsilan oder 1,2-Bis(trichlorsilyl)ethan genannt, ohne die Kopplungsreagenzien darauf zu beschränken. Von diesen Kopplungsreagenzien verbleibt nach der Kopplung X als Rest.

Die Haftklebemasse weist neben den Vinylaromatenblockcopolymeren mindestens ein Klebharz auf, um die Adhäsion in gewünschter Weise zu erhöhen. Das Klebharz sollte mit dem Elastomerblock der Blockcopolymere verträglich sein.

In einer vorteilhaften Ausführungsform der Erfindung besteht die Klebemasse nur aus den Vinylaromatenblockcopolymeren und einem oder mehreren Klebharzen.

Geeignete Klebharze sind unter anderem vorzugsweise nicht hydrierte, partiell oder vollständig hydrierte Harze auf Basis von Kolophonium oder Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder C₉-Monomerströmen oder besonders bevorzugt Polyterpenharze auf Basis von α-Pinen und/oder ß-Pinen und/oder δ-Limonen. Vorgenannte Klebharze können sowohl allein als auch im Gemisch eingesetzt werden. Zudem kann die Klebmasseformulierung auch Klebharze enthalten, die bei Raumtemperatur flüssig sind.
Die Glasübergangstemperatur der eingesetzten Harzmischung, gemessen mit einer DSC (Aufheizrate 20 °C/min), liegt dabei über 50 °C, bevorzugt über 60 °C.

Vorzugsweise besteht die Haftklebemasse nur aus den Vinylaromatenblockcopolymeren und dem oder den Klebharzen.

Der Klebemasse können übliche Zuschlagstoffe wie Alterungsschutzmittel, Antioxidantien, Lichtschutzmittel usw. zugesetzt sein.

Als Zuschlagstoffe zur Klebemasse werden typischerweise genutzt:
- Plastifizierungsmittel wie zum Beispiel Weichmacheröle oder niedermolekulare flüssige Polymere wie zum Beispiel niedermolekulare Polybutene
- primäre Antioxidantien wie zum Beispiel sterisch gehinderte Phenole
- sekundäre Antioxidantien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel
- Netzadditive
- Haftvermittler und/oder
- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine, um nur einige wenige zu nennen

Gemäß einer bevorzugten Ausführungsform der Erfindung umfasst die Gruppe der Zuschlagstoffe nur Alterungsschutzmittel, Antioxidantien, Plastifizierungsmittel, Verarbeitungshilfsmittel, Netzadditive, Haftvermittler und Lichtschutzmittel.

Die Zuschlagstoffe sind nicht zwingend, die Klebemasse funktioniert auch, ohne dass diese einzeln oder in beliebiger Kombination zugesetzt sind.
Gemäß einer weiteren vorteilhaften Ausführungsform der Erfindung besteht die Haftklebemasse nur aus den Vinylaromatenblockcopolymeren, dem oder den Klebharzen sowie einem oder mehreren Zuschlagstoffen gewählt aus der Gruppe:
- Plastifizierungsmittel wie zum Beispiel Weichmacheröle oder niedermolekulare flüssige Polymere wie zum Beispiel niedermolekulare Polybutene
- primäre Antioxidantien wie zum Beispiel sterisch gehinderte Phenole
- sekundäre Antioxidantien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel
- Netzadditive
- Haftvermittler

Weiter vorzugsweise beträgt der gesamte Anteile der Zuschlagstoffe in der Haftklebemasse, jeweils bezogen auf die Gesamtzusammensetzung der Haftklebemasse, bei maximal 20 Gew.-%, weiter vorzugsweise bei maximal 10 Gew.-%. Vorzugsweise liegt der Anteil der Vinylaromatenblockcopolymeren der Strukturen I und II in der Haftklebemasse zwischen 40 Gew.-% und 60 Gew.-%, insbesondere im Bereich zwischen 45 Gew.-% und 55 Gew.-%, jeweils bezogen auf die Gesamtzusammensetzung der Haftklebemasse.

Gemäß einer bevorzugten Ausführungsform der Erfindung weist die Haftklebemasse, jeweils bezogen auf die Gesamtzusammensetzung der Haftklebemasse, die folgende Zusammensetzung auf:
- Vinylaromatenblockcopolymer: 40 Gew.-% bis 60 Gew.-%, insbesondere 45 Gew.-% bis 55 Gew.-%
- Klebharz oder Klebharze: 40 Gew.-% bis 60 Gew.-%, insbesondere 45 Gew.-% bis 55 Gew.-%

Gemäß einer weiteren bevorzugten Ausführungsform der Erfindung weist die Haftklebemasse, jeweils bezogen auf die Gesamtzusammensetzung der Haftklebemasse, die folgende Zusammensetzung auf:
- Vinylaromatenblockcopolymer: 30 Gew.-% bis 59,8 Gew.-%, insbesondere 45 Gew.-% bis 55 Gew.-%
- Klebharz oder Klebharze: 40 Gew.-% bis 50 Gew.-%, insbesondere 45 Gew.-% bis 55 Gew.-%
- Zuschlagstoffe, insbesondere beschränkt auf die oben genannte Gruppe: 0,2 Gew.-% bis 20 Gew.-%, insbesondere 0,5 Gew.-% bis 10 Gew.-%

Die Herstellung und Verarbeitung der Haftklebemassen kann aus Lösung, Dispersion sowie aus der Schmelze erfolgen. Bevorzugte Herstell- und Verarbeitungsverfahren erfolgen aus Lösung sowie aus der Schmelze.

Besonders vorteilhaft lässt sich die erfindungsgemäße Klebemasse in einem ein- oder doppelseitig klebenden Klebeband verwenden. Diese Darreichungsart erlaubt eine besonders einfache und gleichmäßige Applikation der Klebemasse.

Der allgemeine Ausdruck "Klebeband" umfasst dabei ein Trägermaterial, welches ein- oder beidseitig mit einer Haftklebemasse versehen ist. Das Trägermaterial umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge, Mehrschichtanordnungen und dergleichen. Dabei sind für verschiedene Anwendungen unterschiedlichste Träger wie zum Beispiel Folien, Gewebe, Vliese und Papiere mit den Klebmassen kombinierbar. Des Weiteren umfasst der Ausdruck "Klebeband" auch so genannte "Transferklebebänder", das heißt ein Klebeband ohne Träger. Bei einem Transferklebeband ist die Klebemasse vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, die Klebemasse appliziert und dann der zweite Liner entfernt. Die Klebemasse kann so direkt zur Verbindung zweier Oberflächen verwendet werden. Das Klebeband kann in festen Längen wie zum Beispiel als Meterware oder aber als Endlosware auf Rollen (archimedische Spirale) zur Verfügung gestellt werden.

Als Trägermaterial eines Klebebandes werden vorliegend bevorzugt Polymerfolien oder Folienverbunde eingesetzt. Derartige Folien/Folienverbunde können aus allen gängigen zur Folienherstellung verwendeten Kunststoffen bestehen, beispielhaft aber nicht einschränkend erwähnt seien:
Polyethylen, Polypropylen - insbesondere das durch mono- oder biaxiale Streckung erzeugte orientierte Polypropylen (OPP), Polyvinylchlorid (PVC), Polyester-insbesondere Polyethylenterephthalat (PET) und Poylethylennaphtalat (PEN), Polyacrylnitril (PAN), Polycarbonat (PC), Polyamid (PA), Polyethersulfon (PES) oder Polyimid (PI).
Zudem können die Folien/Folienverbunde in bevorzugter Ausgestaltung transparent ausgebildet sein, damit auch der Gesamtaufbau eines derartigen Klebeartikels transparent ausgebildet ist. "Transparenz" bedeutet auch hier eine mittlere Transmission im sichtbaren Bereich des Lichts von mindestens 75 %, bevorzugt höher als 90 %.

Weiterhin können auch Träger auf Basis Papier, Gewebe und/oder Vlies eingesetzt werden.

Bei doppelseitig (selbst)klebenden Klebebändern können als obere und untere Schicht erfindungsgemäße Klebemassen gleicher oder verschiedener Art und/oder gleicher oder verschiedener Schichtdicke zur Anwendung kommen. Der Träger kann dabei auf einer oder beiden Seiten dem Stand der Technik entsprechend vorbehandelt sein, so dass beispielsweise eine Verbesserung der Klebemassenverankerung erzielt wird. Ebenso können eine oder beide Seiten mit einer funktionalen Schicht ausgerüstet sein, die beispielsweise als Sperrschicht fungieren kann. Die Haftklebemasseschichten können optional mit Trennpapieren oder Trennfolien eingedeckt werden. Alternativ kann auch nur eine Klebemasseschicht mit einem doppelseitig trennenden Liner eingedeckt sein.

Weitere Einzelheiten, Ziele, Merkmale und Vorteile der vorliegenden Erfindung werden nachfolgend anhand mehrerer, bevorzugte Ausführungsbeispiele darstellende Figuren näher erläutert. Es zeigen
- Figur 1: ein einseitiges Haftklebeband,
- Figur 2: ein beidseitiges Haftklebeband,
- Figur 3: ein trägerfreies Haftklebeband (Transferklebeband).

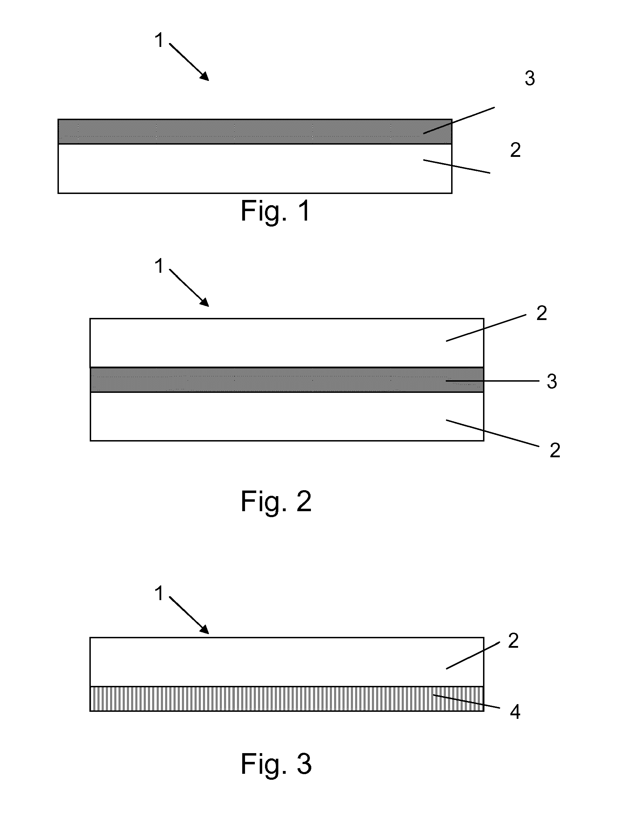

Figur 1 zeigt ein einseitig klebendes Haftklebeband 1. Das Haftklebeband 1 weist eine Klebeschicht 2 auf, die durch Beschichtung einer der zuvor beschriebenen Haftklebemasse auf einen Träger 3 hergestellt wurde. Der Haftklebemassenauftrag beträgt bevorzugt zwischen 10 und 50 g/m².

Zusätzlich (nicht gezeigt) kann noch eine Trennfolie vorgesehen sein, die die Klebeschicht 2 vor der Verwendung des Haftklebebandes 1 abdeckt und schützt. Die Trennfolie wird dann vor der Verwendung von der Klebeschicht 2 entfernt.

Der in Figur 2 dargestellte Produktaufbau zeigt ein Haftklebeband 1 mit einem Träger 3, der beidseitig mit einer Haftklebemasse beschichtet ist und somit zwei Klebeschichten 2 aufweist. Der Haftklebemassenauftrag je Seite beträgt wiederum bevorzugt zwischen 10 und 200 g/m².

Auch bei dieser Ausgestaltung wird bevorzugt zumindest eine Klebeschicht 2 mit einer Trennfolie abgedeckt. Bei einem aufgerollten Klebeband kann diese eine Trennfolie gegebenenfalls auch die zweite Klebeschicht 2 abdecken. Es können aber auch mehrere Trennfolien vorgesehen sein.

Des Weiteren ist es möglich, dass die Trägerfolie mit einer oder mehreren Beschichtungen versehen ist. Weiterhin kann auch nur eine Seite des Haftklebebandes mit der erfinderischen Haftklebemasse ausgestattet sein und auf der anderen Seite eine andere Haftklebemasse eingesetzt werden.

Der in Figur 3 dargestellte Produktaufbau zeigt ein Haftklebeband 1 in Form eines Transferklebebandes, das heißt, ein trägerfreies Haftklebeband 1. Hierzu wird die Haftklebemasse einseitig auf eine Trennfolie 4 beschichtet und bildet so eine Haftklebeschicht 2 aus. Der Haftklebemassenauftrag beträgt hier üblicherweise zwischen 10 und 50 g/m². Gegebenenfalls wird diese Haftklebeschicht 2 noch auf ihrer zweiten Seite mit einer weiteren Trennfolie abgedeckt. Zur Verwendung des Haftklebebandes werden dann die Trennfolien entfernt.

Als Alternative zu Trennfolien können beispielsweise auch Trennpapiere oder dergleichen eingesetzt werden. In diesem Fall sollte die Oberflächenrauigkeit des Trennpapiers aber reduziert sein, um eine möglichst glatte Haftklebemassenseite zu realisieren.

### Herstellung der Haftklebestreifen

Die Bestandteile der Haftklebemassen wurden hierbei in Toluol/Aceton 3:1 (Feststoffgehalt 40 %) gelöst und mit Hilfe eines Streichbalkens auf einer PET-Folie mit einer Dicke von 36 µm ausgestrichen, so dass nach der Trocknung bei 100 °C ein Masseauftrag von 50 g/m² gemessen werden konnte.

### Prüfmethoden

Die Messungen werden, wenn nicht anders angegeben, bei einem Prüfklima von 23 ± 1 °C und 50 ± 5 % rel. Luftfeuchte durchgeführt.

### Klebkraft

Die Bestimmung der Klebkraft wird wie folgt durchgeführt: Als definierter Haftgrund werden eine Stahlfläche oder eine Polyesterfolie eingesetzt. Das zu untersuchende verklebbare Flächenelement wird auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den Haftgrund aufgedrückt. Unmittelbar im Anschluss daran wird das verklebbare Flächenelement in einem Winkel von 180° und einer Abzugsgeschwindigkeit von 300 mm/min vom Haftgrund mit einem Zugprüfungsgerät (Firma Zwick) abgezogen und die hierfür benötigte Kraft gemessen. Der Messwert (in N/cm) ergibt sich als Mittelwert aus drei Einzelmessungen.

### Statischer Schertest

Die Scherfestigkeit ist ein Maß für die innere Festigkeit der Klebmasse und wird im so genannten statischen Schertest folgendermaßen geprüft: Es wird ein 20 x 13 mm Streifen des mit der Klebmasse einseitig mit einem Masseauftrag von 50 g/m² beschichteten Klebebandes auf dem Prüfuntergrund (Stahl; Material nach DIN EN 10088-2, Typ 1, 4301, Oberflächenqualität 2R, kaltgewalzt und blankgeglüht, Rₐ 25 bis 75 nm) aufgeklebt. Der vorbereitete Prüfling wird mit einem Gewicht von 2 kg bei einer Geschwindigkeit von 0,03 m/min viermal überrollt und dann auf Scherung mit einem Gewicht belastet. Als Ergebnis wird die Zeit, die das Klebeband zum Abscheren vom Prüfuntergrund benötigt, in Minuten angegeben. Die in Tabelle 2 aufgeführten Ergebnisse werden bei einer Belastung der Proben von 5 N bei 70 °C erzielt.

### Statische Glasübergangstemperatur T_{g}

Die Bestimmung der statischen Glasübergangstemperatur erfolgt über Dynamische Differenzkalorimetrie nach DIN 53765. Die Angaben zur Glasübergangstemperatur Tg beziehen sich auf den Glasumwandlungstemperatur-Wert Tg nach DIN 53765:1994-03, sofern im Einzelfall nichts anderes angegeben ist.

### Molekulargewicht

Die Bestimmung des mittleren Molekulargewichtes M_{W} erfolgt mittels Gelpermeationschromatographie (GPC). Als Eluent wird THF mit 0,1 Vol.-% Trifluoressigsäure eingesetzt. Die Messung erfolgt bei 25 °C. Als Vorsäule wird PSS-SDV, 5 µm, 10³ Å, ID 8,0 mm x 50 mm verwendet. Zur Auftrennung werden die Säulen PSS-SDV, 5 µm, 10³ Å, 10⁵ Å und 10⁶ Å mit jeweils ID 8,0 mm × 300 mm eingesetzt. Die Probenkonzentration beträgt 4 g/l, die Durchflussmenge 1,0 ml pro Minute. Es wird gegen PMMA-Standards gemessen.

### Beispiele:

Im Folgenden wird die Erfindung durch einige Beispiele näher erläutert, ohne die Erfindung damit einschränken zu wollen.

Zusammensetzung der Beispiele in Gewichtsanteilen siehe Tabelle

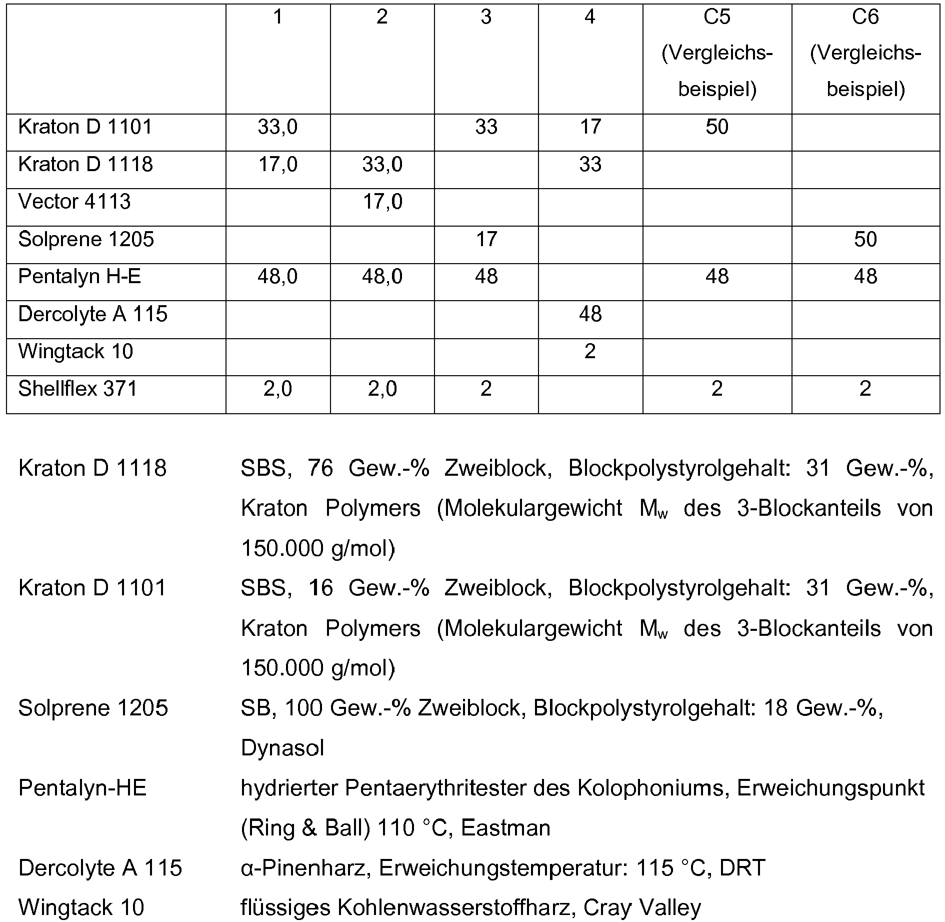

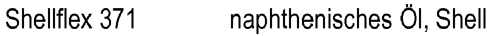

Die Ring- und Ball-Methode ist die übliche Methode zur Feststellung der Erweichungspunkte. Einzelheiten können der ASTM E 28 und der DIN EN 1238 entnommen werden, auf die hiermit ausdrücklich Bezug genommen wird.

Bei den beispielhaften Haftklebestreifen wurden die folgenden klebtechnischen Daten ermittelt:

| | 1 | 2 | 3 | 4 | C5 | C6 |
|---|---|---|---|---|---|---|
| | | | | | (Vergleichsbeispiel) | (Vergleichsbeispiel) |
| Klebkraft Stahl | 8,5 | 10,9 | 9,4 | 9,2 | 7,5 | 10,4 |
| Klebkraft PE | 3,5 | 6,4 | 4,1 | 4,8 | 1,2 | 5,5 |
| Scherstandzeit bei 70 °C (0,5 kg) (kohäsives Versagen) | >10.000 | 3400 | 7900 | >10.000 | 1200 | 200 |
| | | | | | (adhäsives Versagen) | |

Wie die Beispiele zeigen, besteht der Vorteil der erfindungsgemäßen Haftklebemasse in der sehr hohen Klebkraft bei gleichzeitiger hoher Scherstandzeit. Die Klebmasse klebt sowohl auf polaren und unpolaren Untergründen sehr gut. Überraschenderweise ist die Temperaturbeständigkeit deutlich besser als bei den normalen Klebmassen auf Basis von Styrolblockcopolymeren, was an der hohen Scherstandzeit bei 70 °C zu erkennen ist.

## Patentansprüche

1. Haftklebemasse mindestens zu 70 Gew.-%, vorzugsweise zu 80 Gew.-% enthaltend ein Gemisch aus
(i) Blockcopolymeren aus einer Mischung aus Blockcopolymeren mit der Struktur I und II
I) A'-B'
II) A-B-A, (A-B)ₙ, (A-B)ₙX und/oder (A-B-A)ₙX, wobei
• X der Rest eines Kopplungsreagenzes ist,
• n eine ganze Zahl zwischen 2 und 10 ist,
• A und A' ein Polymerblock aus einem Vinylaromaten ist,
• B und B' ein Polymerblock ist, gebildet aus Butadien, einem Gemisch aus Butadien und Isopren und/oder einem Gemisch aus Butadien und Styrol und
• A und A' beziehungsweise B und B' gleich oder unterschiedlich sein können,
(ii) mindestens ein Klebharz,
wobei der Anteil der Blockcopolymere I) zwischen 30 und 70 Gew.-% bezogen auf die Gesamtmenge an Blockcopolymeren ist,
wobei der Anteil A bei den Blockcopolymeren II) zwischen 25 und 40 Gew.-% liegt, und wobei die A-B-Einheit innerhalb von zumindest einem der Vinylaromatenblockcopolymere der Struktur II ein Molekulargewicht M_{w} von größer 65.000 g/mol aufweist und das Molekulargewicht M_{w} des gesamten Blockcopolymeren II größer als 130.000 g/mol ist.

2. Haftklebemasse nach Anspruch 1,
**dadurch gekennzeichnet, dass**
die Haftklebemasse als Elastomere nur ein Gemisch von Vinylaromatenblockcopolymeren der Strukturen I und II enthält, wobei das Gemisch aus jeweils einem Vinylaromatenblockcopolymer der Struktur I und einem Vinylaromatenblockcopolymer der Struktur II oder das Gemisch aus mehreren unterschiedlichen Vinylaromatenblockcopolymeren der Strukturen I und II bestehen kann.

3. Haftklebemasse nach Anspruch 1 oder 2,
**dadurch gekennzeichnet, dass**
der Anteil des Vinylaromatenblockcopolymers oder der Vinylaromatenblockcopolymere der Struktur I an der Summe aus den Vinylaromatenblockcopolymeren der Struktur I und II zwischen 30 und 70 Gew.-%, bevorzugt zwischen 50 und 65 Gew.-% liegt.

4. Haftklebemasse nach zumindest einem der Ansprüche 1 bis 3,
**dadurch gekennzeichnet, dass**
der oder die Anteil des Vinylaromatenendblocks A' an dem Blockcopolymer der Struktur I zwischen 20 und 40 Gew.-%, bevorzugt zwischen 25 und 33 Gew.-% betragen.

5. Haftklebemasse nach zumindest einem der vorherigen Ansprüche,
**dadurch gekennzeichnet, dass**
der oder die Anteil(e) des Vinylaromatenendblocks A' an dem Blockcopolymer der Struktur I zwischen 13 und 20 Gew.-% liegen.

6. Haftklebemasse nach zumindest einem der vorherigen Ansprüche,
**dadurch gekennzeichnet, dass**
als Klebharze nicht hydrierte, partiell oder vollständig hydrierte Harze auf Basis von Kolophonium oder Kolophoniumderivaten, hydrierte Polymerisate des Dicyclopentadiens, nicht hydrierte, partiell, selektiv oder vollständig hydrierte Kohlenwasserstoffharze auf Basis von C₅-, C₅/C₉- oder C₉-Monomerströmen oder bevorzugt Polyterpenharze auf Basis von α-Pinen und/oder ß-Pinen und/oder δ-Limonen eingesetzt werden.

7. Haftklebemasse nach zumindest einem der vorherigen Ansprüche,
**dadurch gekennzeichnet, dass**
der Anteil der Vinylaromatenblockcopolymeren der Strukturen I und II in der Haftklebemasse zwischen 40 Gew.-% und 60 Gew.-%, insbesondere im Bereich zwischen 45 Gew.-% und 55 Gew.-%, jeweils bezogen auf die Gesamtzusammensetzung der Haftklebemasse, liegt.

8. Haftklebemasse nach zumindest einem der vorherigen Ansprüche,
**dadurch gekennzeichnet, dass**
die Haftklebemasse die folgende Zusammensetzung aufweist:
• Vinylaromatenblockcopolymer: 40 Gew.-% bis 60 Gew.-%, insbesondere 45 Gew.-% bis 55 Gew.-%
• Klebharz oder Klebharze: 40 Gew.-% bis 60 Gew.-%, insbesondere 45 Gew.-% bis 55 Gew.-%

9. Haftklebemasse nach zumindest einem der vorherigen Ansprüche,
**dadurch gekennzeichnet, dass**
als Vinylaromaten eingesetzt werden Styrol, Vinyltoluol, α-Methylstyrol, Chlorstyrol, o-, oder p-Methylstyrol 2,5-Dimethylstyrol, p-Methoxystyrol und/oder p-tert.-Butylstyrol.

10. Haftklebemasse nach zumindest einem der vorherigen Ansprüche,
**dadurch gekennzeichnet, dass**
die Haftklebemasse nur aus den Vinylaromatenblockcopolymeren und dem oder den Klebharzen besteht.

11. Verwendung einer Haftklebemasse nach zumindest einem der vorherigen Ansprüche in einem ein- oder beidseitig klebenden Klebeband.
